# EUROPÄISCHE PATENTANMELDUNG

(11) **EP 3 875 185 A1**
(43) Veröffentlichungstag der Anmeldung: **08.09.2021**
(21) Anmeldenummer: 20161171.2
(22) Anmeldetag: 05.03.2020
(51) Int. Cl.: B22F 3/10, B22F 3/105, B29C 64/165, B33Y 10/00, B33Y 70/00, B33Y 70/10, C09D 11/30, H01F 1/44

(54) **SELECTIVE SUPERPARAMAGNETIC SINTERING UND EINE DAFÜR GEEIGNETE TINTE**

(71) Anmelder: Evonik Operations GmbH, 45128 Essen (DE)
(72) Erfinder: WUNNICKE Odo, 48161 Munster (DE); LEUCHS Susanne, 45721 Haltern am See (DE); HUPFELD Tim, 45143 Essen (DE); HOLTHAUSEN Michael, 45721 Haltern am See (DE); PIERICK Vanessa, 45896 Gelsenkirchen (DE); MISPELKAMP Dominik, 45770 Marl (DE); CORNELIUS Maximilian, 60389 Frankfurt am Main (DE); MACK Helmut, 83278 Traunstein (DE); FRINGS Bodo, 33758 Schloss Holte Stukenbrock (DE); GROSSE-PUPPENDAHL Thomas, 45721 Haltern am See (DE); MONSHEIMER Sylvia, 45721 Haltern am See (DE); HEINDL Frank, 63517 Rodenbach (DE)
(74) Vertreter: Evonik Patent Association

(57) **Zusammenfassung**

Die Erfindung betrifft Verfahren zur Herstellung von dreidimensionalen Objekten mittels Powder Bed Fusion-Verfahren, wobei Tinten umfassend superparamagnetische Partikel und Lösemittel eingesetzt werden. Das Sintern erfolgt durch ein magnetisches Feld mit einer Frequenz von 50 kHz bis 100 MHz.

## Beschreibung

Die vorliegende Erfindung betrifft magnetische Tinten für Powder Bed Fusion-Verfahren, ihre Verwendung in Powder Bed Fusion-Verfahren sowie Verfahren zur Herstellung von dreidimensionalen Objekten.

Generative Fertigungsverfahren, häufig auch als Additive Manufacturing oder Rapid Prototyping bezeichnet, werden eingesetzt, um dreidimensionale Objekte schnell und kostengünstig fertigen zu können. Diese Fertigung erfolgt direkt auf der Basis der rechnerinternen Datenmodelle aus formlosem (Flüssigkeiten, Pulver u. ä.) oder form-neutralem (band-, drahtförmig) Material mittels chemischer und/oder physikalischer Prozesse. Insbesondere Polymerpulver wie Polyamidpulver eignen sich als formloses Material.

Eines der generativen Fertigungsverfahren, die Powder Bed Fusion-Technologie umfasst unter anderem das Direkte Metall-Lasersintern (DMLS), das Elektronenstrahlschmelzen (EBM), das Selective Heat Sintering (SHS), das selektive Laserschmelzen (SLM), das selektive Lasersintern (SLS), das Selective Absorbing Sintering (SAS) und das Selective Inhibition Sintering (SIS).

Die Selektivität der Verfahren ohne Laser kann beispielsweise durch Absorber (Selective Absorbing Sintering, SAS) oder Inhibitoren (Selective Inhibition Sintering, SIS) erfolgen. Beim SAS-Verfahren wird die Absorption des mit dem Absorber beaufschlagten Materials erhöht; im Gegensatz dazu verzögert der Inhibitor das Aufschmelzen. Absorber und Inhibitor können in einem Verfahren gemeinsam zum Einsatz kommen. Geeignete Energiequellen in SAS-Verfahren sind solche, die nur bedingt in das Material einkoppeln. Beim SIS-Verfahren ist die Energiequelle so zu wählen, dass die Erwärmung des Materials ausreichend schnell erfolgt. Das SAS-Verfahren wird beispielsweise in US 2007/238056 beschrieben. US 2004/137228 A1 stellt das SIS-Verfahren dar.

Absorber und Inhibitoren können in einer Flüssigkeit gelöst oder dispergiert, beispielsweise mittels Inkjetverfahren in Form von Tinten, auf das Material aufgebracht werden. Als Absorber wird beispielsweise Aktivkohle eingesetzt, was jedoch hohe Temperaturen erfordert.

Nachteilig bei diesen Verfahren ist, dass das Pulvermaterial, aus dem das dreidimensionale Objekt aufgebaut wird, auf eine hohe Temperatur kurz vor der Schmelze gehalten werden muss. Dies führt zur Alterung des gesamten Pulvers, was wiederum verringerte Materialeigenschaften des dreidimensionalen Objekts aus recyceltem Pulver zur Folge hat. Darüber hinaus können mit den genannten Verfahren üblicherweise nur sehr geringe Schichtdicken gleichzeitig miteinander versintert werden.

Insofern bestand die Aufgabe darin, ein neues Verfahren zur Herstellung von dreidimensionalen Objekten zur Verfügung zu stellen, welches die Nachteile des Standes der Technik nicht mehr aufweist. Das Verfahren sollte es ermöglichen, Pulver nicht nur bei erhöhter Bauraumtemperatur, sondern auch bei Umgebungstemperatur zu dreidimensionalen Objekten verarbeiten zu können. Zudem sollte das Verfahren es ermöglichen, ein gleichzeitiges Versintern von Schichten größerer Schichtdicken zu erzielen. Darüber hinaus sollte das Verfahren Polymerpulver mit hohen Glasübergangstemperaturen über 200 °C versintern können.

Gelöst werden konnte dies durch ein Powder Bed Fusion-Verfahren, bei dem ein Pulver in einer Schichtdicke von 30 µm bis 200 µm (Schicht) bereitgestellt wird. Anschließend wird eine Tinte mittels Inkjet-Verfahren auf die zu sinternden Stellen des Pulvers aufgebracht, bevor weiteres Pulver aufgebracht wird. Das Aufbringen von Tinte und Pulver wird wiederholt. Dadurch erfolgt ein schichtweises Auftragen von Pulvermaterial. Es wird ein magnetisches Feld mit einer Frequenz von 50 kHz bis 100 MHz, vorzugsweise 500 kHz bis 10 MHz, zur selektiven Sinterung eingestellt. Das Verfahren wird vorzugsweise bei einer Temperatur von 10 °C bis 40 °C, bevorzugt bei Raumtemperatur (18 °C bis 25 °C), durchgeführt. Das zuvor genannten Verfahren kann als Selective Superparamagnetic Sintering (SSS) bezeichnet werden.

Das magnetische Feld kann nach jedem Aufbringen einer Schicht aktiviert werden. Alternativ kann das magnetische Feld erst nach dem Aufbringen mehrerer Schichten aktiviert werden. Damit können mehrere Schichten gemeinsam und gleichzeitig versintert werden. Damit ist es auch möglich, zunächst die Schichten für ein gesamtes dreidimensionales Objekt bereitzustellen und im Anschluss das Sintern des gesamten Objekts vorzunehmen.

Die Tinte für Powder Bed Fusion-Verfahren umfasst superparamagnetische Partikel und mindestens ein Lösemittel. Vorzugsweise ist sind die superparamagnetischen Partikel als Kern/Schale-Teilchen aufgebaut, wobei mindestens ein Kern mindestens einen superparamagnetischen Stoff umfasst und die mindestens eine Schale nicht-magnetisch ist.

Das magnetische Feld sorgt für eine Erwärmung der superparamagnetischen Partikel und damit des Pulvers. Verantwortlich für die Erwärmung ist die Néel-Relaxation oder eine Brown'sche Bewegung. Die Erhitzung durch induzierte Wirbelströme ist hingegen vernachlässigbar klein. Die Beaufschlagung eines Magnetfelds führt zudem nicht zu einer klassischen Absorption, da Elektronen im Festkörper nicht durch Energie wie z.B. Licht in höhere Zustände gebracht werden. Vielmehr erfolgt eine Ausrichtung im magnetischen Wechselfeld.

Die Tinte für das Inkjet-Verfahren verlangt auf Grund der üblicherweise eingesetzten Druckköpfe Partikelgrößen bis zu 10 µm, vorzugsweise bis zu 1 µm. Bevorzugt weisen die Bestandteile der Tinten - mit Ausnahme der superparamagnetischen Partikel - Größen im Bereich von 50 bis 500 nm auf.

Das Lösemittel kann wässrig oder nichtwässrig sein. Die Tinte enthält vorzugsweise 50 bis 75 Gew.-% Lösemittel, bezogen auf das Gesamtgewicht der Tinte. Vorzugsweise ist das Lösemittel wässrig. Bevorzugte wässrige Lösemittel sind enthalten mindestens 20 Gew.-% Wasser, bevorzugt mindestens 50 Gew.-% Wasser, bezogen auf das Gesamtgewicht an Lösemittel. Die Tinte, insbesondere die nichtwässrige Tinte, kann auch ein Additiv zur Steuerung der Wärmeleitfähigkeit enthalten (Wärmeleitfähigkeitsadditiv). Dies kann der Fachmann ggf. einsetzen, sofern eine Anpassung der Wärmeleitfähigkeit zum Erhalt von Formkörpern besserer Güte erforderlich erscheint. Hierzu können einfache Vorversuche herangezogen werden. Ein derartiges Additiv kann zum Beispiel nicht elektrisch leitend sein. Hierzu zählt beispielsweise Magnesiumoxid, Aluminiumoxid, Aluminiumtrihydroxid, hexagonales Bornitrid, Aluminiumnitrid, Alumosilikat, Zinksulfid oder Mischungen davon. Geeignete elektrisch leitende Additive sind ausgewählt aus Graphit, Carbon Black, Carbon Nanotubes und Mischungen daraus.

In einer bevorzugten Ausführungsform wird Wasser sowie weiterhin ein mit Wasser mischbares organisches Lösemittel, vorzugsweise ein protisches organisches Lösemittel, eingesetzt. Mischbar bedeutet, dass keine Phasentrennung erfolgt. Das organische Lösemittel sollte bei 1013 hPa einen Siedepunkt von < 300 °C aufweisen. Besonders bevorzugte Lösemittel werden ausgewählt aus 2-Pyrrolidon, Ethylenglykol, Methoxyisopropanol, Polyethylenglykol und Mischungen davon.

Die Tinte enthaltend wässrige Lösemittel weist vorzugsweise einen pH-Wert von 3 bis 12, bevorzugt von 4 bis 11 und besonders bevorzugt von 4 bis 9 auf. Die Einstellung des pH-Werts ist dem Fachmann geläufig und kann mit entsprechenden Säuren oder Basen vorgenommen werden.

Die superparamagnetischen Partikel sind vorzugsweise ausgewählt aus der Gruppe der ferromagnetischen, anti-ferromagnetischen oder ferri-magnetischen Stoffe. Bevorzugt werden sie ausgewählt aus Stoffen, die Fe, Co, Ni, Nd sowie ihren Mischungen enthalten. Dazu zählen ihre Verbindungen und ihre Legierungen. Geeignete Verbindungen oder Legierungen sind Neodym-Eisen-Bor, Samarium-Cobalt, Neodym-Stickstoff, Aluminium-Nickel-Cobalt, Fe₂TiSn, CoFe₂O₄, Bi_{0.95}Mn_{0.05}FeO₃, Ni_{0.5}Zn_{0.5}Fe₂O₄, xNiFe₂O₄ - (1-x)BaTiO₃ (x = 0.2 oder 0.3)), La_{0.8}Sr_{0.2}MnO₃, Ba and Ta co-dotierte BiFeO₃ Keramiken, Fe₂O₃, Fe₃O₄ und Mischungen daraus. Fe₂O₃, Fe₃O₄ sind besonders bevorzugt.

Die Kern/Schale-Teilchen umfassen mindestens einen Kern mit mindestens einen superparamagnetischen Partikel. Der Durchmesser eines Kerns weist vorzugsweise einen Durchmesser von 2 nm bis 50 µm, bevorzugt von 2 nm bis 100 nm, besonders bevorzugt von 2 nm bis 50 nm und ganz besonders bevorzugt von 2 nm bis 30 nm auf. Der Durchmesser von Fe₃O₄ ist besonders bevorzugt 2 nm bis 13 nm. Der Kerndurchmesser ist insbesondere abhängig davon, in welchen Dimensionen die superparamagnetischen Eigenschaften auftreten. Der Fachmann wählt geeignete Durchmesser in Abhängigkeit vom ausgewählten Material aus.

Der Durchmesser der Kern/Schale-Partikel beträgt vorzugsweise 3 nm bis 100 µm.

Geeignete Kern/Schale-Teilchen werden beispielsweise in WO 2012/103974 oder WO 2014/009107 beschrieben. Diese werden beispielsweise unter den Namen MagSilica von der Fa. Evonik angeboten.

Die Schale ist nicht-magnetisch, vorzugsweise nicht paramagnetisch. Metalle als Schalenmaterial sind somit ausgeschlossen. Bevorzugt ist die Schale diamagnetisch. Bevorzugte Schalenmaterialien sind Siliciumoxide, besonders bevorzugt geeignet ist Siliciumdioxid. Das Schalenmaterial des Kern-Schale-Partikels sollte temperaturstabil sein, d.h. bei Temperaturen von > 200 °C, idealerweise bis zur Curie-Temperatur des eingesetzten Kerns sollte keine Zersetzung, ein Schmelzen oder Sublimieren des Schalenmaterials einsetzen.

Die Oberfläche der Schale kann modifiziert sein. Beispielsweise kann die Modifizierung hydrophil, hydrophob oder oleophob ausfallen. Die Modifizierung kann während oder nach der Herstellung der Kern-Schale-Partikel erfolgen. Geeignete Modifizierungen werden beispielsweise durch Alkylalkoxysilane vorgenommen, welche zu einer hydrophoben Modifizierung führen. Geeignete Silane werden vorzugsweise ausgewählt aus Hexamethyldisilazan (HMDS, Dynasilan HMDS von Evonik), Octyltrimethoxysilan (Dynasylan OCTMO von Evonik), Octyltriethoxysilan (Dynasylan OC-TEO von Evonik), Hexadecyltrimethoxysilan (Dynasylan 9116 von Evonik) und Mischungen davon. Für hydrophile Modifizierungen eignen sich Polyether-funktionelle Trimethoxysilane. Entsprechend modifizierte Partikel erhöhen die Dispergierbarkeit und Stabilität. Polyether-funktionelle Trimethoxysilane sind beispielsweise als Dynasylan 4148 oder Dynasylan 4150 (Evonik) erhältlich.

Die Methode zur Modifizierung der Schale wird beispielsweise durch Vermischen der Kern/Schale-Partikel mit Wasser und dem Silan. Anschließend wird die Mischung für einige Stunden auf Temperaturen von 80 °C bis 120 °C erhitzt. Es folgt eine Trocknung des Pulvers über mehrere Stunden. Zur Kontrolle der vollständigen Reaktion kann der pH-Wert der Mischung kontrolliert werden.

Die Schale um die superparamagnetischen Partikel führt zu einer Einkapselung der Partikel. Die Einkapselung hat den Vorteil, dass die Partikel nicht unmittelbar mit dem Pulver für das dreidimensionale Objekt in Berührung kommen. Es wird eine Kontamination bzw. ein direkter Kontakt des Pulvers mit Metallen oder ihren Verbindungen vermieden, was sonst möglicherweise zu einer Alterung des dreidimensionalen Objekts führen könnte.

Bevorzugte Tinten enthalten 0,5 bis 40 Gew.-% Kern/Schale-Partikel, 50 bis 75 Gew.-% mindestens eines Lösemittels, 0 bis 10 Gew.-% Pigmente, 0 bis 3 Gew.-% Dispergiermittel, 0 bis 4 Gew.-% eines Wärmeleitfähigkeitsadditivs und 0 bis 3 Gew.-% Netzmittel, jeweils bezogen auf das Gesamtgewicht an Tinte. Geeignete Dispergier- und Netzmittel sind ausgewählt aus Methoxyisopropanol, Polyacralyte, Polyether, Polysiloxane, Alkoxylate, Polyamide, Aminoalkohole, Amine, Anorg. Säuren bzw. Laugen, langkettige organische Säuren bzw. deren Salze.

Ein bevorzugtes Pulver für das Verfahren zur Herstellung von dreidimensionalen Objekten ist ein Polymerpulver. Geeignete Polymere der Polymerpulver sind ausgewählt aus Polyamiden, Polyimiden, Polyolefinen wie Polyethylen und Polypropylen, Polyestern und Polyaryletherketonen (PAEK) wie Polyetheretherketon (PEEK). Geeignete Polyamide können übliche und bekannte Polyamide sein. Polyamide umfassen Homo-Polyamide und Co-Polyamide. Geeignete Polyamide oder Co-Polyamide sind ausgewählt aus Polyamid 6, 11, 12, 1013, 1012, 66, 46, 613, 106, 11/1010, 1212 und 12/1012. Ein bevorzugtes Polyamid ist ausgewählt aus Polyamid 11, 12, 1013, 1012, 66, 613, 11/1010, 1212 und 12/1012, besonders bevorzugt Polyamid 11 oder 12 und ganz besonders bevorzugt Polyamid 12.

Ein weiterer Gegenstand der Erfindung ist die Verwendung der erfindungsgemäßen Tinte in einem Powder Bed Fusion-Verfahren, wobei es sich vorzugsweise um Selective Absorbing Sintering (SAS) handelt. Hierbei ist es bevorzugt, die Tinte mittels Inkjet-Verfahren aufzubringen.

### Beispiele

### Beispiel 1: Versintern von Pulver

Es wurden ca. 50 g PEEK-Pulver (VESTAKEEP 2000 FP) mit einem Sieb mit einer Maschenweite von 125 µm per Hand gesiebt. Die Fraktion < 125 µm wurde dann im Verhältnis 9:1 (w/w) mit Eisen(II/III)-oxid (50 - 100 nm), Eisen(II/III)-oxid < 5µm oder mit superparamagnetischen Kern/Schale-Partikeln (Kern: ≈13nm, Schale: Siliciumdioxid; MagSilica von Evonik; Partikelgröße dso ≈ 200nm) versetzt. Von jeder Pulvermischung wurden 10 g hergestellt. Die Pulvermischungen wurden dann ca. 2 h lang auf einem Rhönradmischer Fa. J. Engelsmann AG Typ PRM Mini II bei 40 rpm mit 12 Mahlkugeln mit einem Durchmesser von 5 mm fein vermischt. Anschließend wurden die Pulvermischungen einzeln in Silikonformen gefüllt und unter der Induktionsspule (flache Geometrie; Durchmesser: 5cm; Zahl der Windungen N= 4-5) mit einem Abstand von < 3mm zur Pulverbettoberfläche 10 s bei einer Frequenz von 1 MHz versintert.

| **Nr.** | **Fe-Komponente** | **Partikelgrösse Fe-Komponente** | **m/g** | **Leistungseintrag relativ** |
|---|---|---|---|---|
| 1 | Fe(II/III)-oxid | < 5 µm | 0.031 | 1.00 |
| 2 | Fe(II/III)-oxid | 50-100 nm | 0.065 | 2.10 |
| 3 | MagSilica | MagSilica | 0.206 | 6.65 |

Hierbei wurden Festkörper unterschiedlicher Massen als Funktion der Eisenkomponente hergestellt. Wurde dem PEEK-Pulver als energieabsorbierende Komponente Fe(II/III)-oxid < 5µm beigemischt, betrug die Masse des aufgeschmolzenen Festkörpers ca. 30 mg, mit kleineren Partikeln betrug die Masse des Festkörpers 65 mg und mit MagSilica-Partikeln konnte in der gleichen Zeit bei gleicher Frequenz und Feldstärke ein Festkörper mit einer Masse von 206 mg hergestellt werden. Somit ist die Energieeinkopplung mit MagSilica als energieabsorbierender Komponente 6,65 mal grösser als mit Fe(II/III)-oxid < 5 µm, vorausgesetzt, alle Phasenübergänge sind in allen drei Proben gleich und damit auch der Verlauf der spezifischen Wärmekapazität C.

### Beispiel 2: Herstellung eines gedruckten Polyamid 12 Zugstabs

Für die Herstellung einer druckbaren, wässrigen MagSilica-Tinte wurde zunächst eine Dispersion mit einem höheren MagSilica-Gehalt hergestellt.

### Herstellung von MagSilica Dispersionen

Für die Herstellung der MagSilica Dispersionen wurde MagSilica HS (Evonik) verwendet. Um die Dispersion herzustellen, wurden 100 g VE-Wasser in einem doppelwandigen Dispergierbehälter mit angeschlossener Wasserkühlung vorgelegt und anschließend schrittweise 45,8 g MagSilica Pulver zugesetzt. Dabei wurde mittels einer zentrisch im Gefäß platzierten Dissolverscheibe im Bereich von ca. 900 - 2000 min⁻¹ dispergiert. Die Temperatur wurde bei ca. 18 °C konstant gehalten. Nachdem die gesamte Menge an MagSilica zugesetzt und homogen dispergiert war, wurde die Dispergierscheibe entfernt und durch eine Ultraschall-Sonotrode ersetzt. Die Sonotrode hatte eine Leistung von ca. 400 W. Nun wurde für 30 Minuten mittels Ultraschalles dispergiert, wobei die Temperatur durch die Kühlung des Doppelmantels ebenfalls konstant auf ca. 18 °C gehalten wurde. Nach beendeter Dispergierung wurde die Sonotrode entfernt und die Dispersion charakterisiert. Der Glührückstand der Dispersion betrug 33,5 %, die Viskosität der Dispersion betrug 72,7 mPas bei einer Scherrate von 100 s⁻¹ und 493,1 mPas bei einer Scherrate von 10 s⁻¹ und einer Temperatur von 23°C (Physica MCR 300, Anton Parr).

### Herstellung MagSilica-haltigen Tinten

Zur Herstellung einer wasserbasierten MagSilica-haltigen Tinte wurden 2,5 g der oben beschriebenen Stammdispersion mit 10 mg TegoWet 500 (Benetzungsaddditiv) und 7,49 g Wasser gemischt, der pH-Wert mit einer verdünnten KOH-Lösung auf 10,5 eingestellt und die Mischung dann mit einem Ultraschallfinger (0,5; 70%, 5 min) behandelt. Anschließend wurde der pH-Wert der Dispersion kontrolliert und gegebenenfalls nachjustiert. Bevor die Tinte verdruckt wurde, wurde sie über Zellstoff filtriert.

### Herstellung eines Zugstabes der DIN-Norm 5A

Für die Herstellung eines Zugstabes der DIN-Norm 5A wurden zunächst 12 Schichten à 150 µm Vestosint 1115 im Wechsel mit gedruckten Lagen aus der oben beschriebenen Tinte in der entsprechenden Form (Querschnitt DIN 5A) auf einer Rakelunterlage aus PVC hergestellt. Alle 12 Schichten wurden gemeinsam bei einer Leistung von 5 kW und einer Frequenz von 980 kHz versintert.

Tintencharakterisierung und Testdruck am Dimatix:
Tropfengeschwindigkeit: 7,1 m/s
Viskosität (30°C, 1000 s-1): 1.84 mPa s
Oberflächenspannung: 21.4 mN/m
Dichte: 1.09 g/ml

Der fertige Zugstab wurde nach DIN EN ISO 527-1 bei Raumtemperatur auf seine Zugfestigkeit und Dehnbarkeit mittel Zugprüfung getestet. Die gemessen Zugfestigkeit betrug 23,1 MPa und die entsprechende Bruchdehnung 11%. Ein durch Aufschmelzen analog geformter Prüfkörper wies eine vergleichbare Zugfestigkeit von 21,3 MPa und eine leicht höhere Bruchdehnung von 15% auf.

## Patentansprüche

1. Tinte für Powder Bed Fusion-Verfahren, umfassend
a. superparamagnetische Partikel
b. mindestens ein Lösemittel.

2. Tinte nach Anspruch 1, **dadurch gekennzeichnet, dass** die superparamagnetischen Partikel Kern/Schale-Teilchen sind mit
i. mindestens einem Kern umfassend mindestens einen superparamagnetischen Stoff und
ii. mindestens einer nicht-magnetischen Schale.

3. Tinte nach einem der vorherigen Ansprüche, **dadurch gekennzeichnet, dass** das Lösemittel ein wässriges Lösemittel ist.

4. Tinte nach Anspruch 3, **dadurch gekennzeichnet, dass** weiterhin ein mit Wasser mischbares organisches Lösemittel enthalten ist, vorzugsweise ein protisches Lösemittel, besonders bevorzugt ausgewählt aus 2-Pyrrolidon, Ethylenglykol, Methoxyisopropanol, Polyethylenglykol und Mischungen davon.

5. Tinte nach Anspruch 3, **dadurch gekennzeichnet, dass** der pH-Wert der Tinte 3 bis 12, vorzugsweise 4 bis 11, beträgt.

6. Tinte nach einem der vorherigen Ansprüche, **dadurch gekennzeichnet, dass** die superparamagnetischen Partikel ausgewählt sind aus der Gruppe der ferromagnetischen, anti-ferromagnetischen oder ferrimagnetischen Stoffe.

7. Tinte nach Anspruch 6, **dadurch gekennzeichnet, dass** die superparamagnetischen Partikel ausgewählt sind aus Stoffen, die Fe, Co, Ni, Nd und ihre Mischungen enthalten.

8. Tinte nach einem der Ansprüche 2 bis 7, **dadurch gekennzeichnet, dass** der Kern einen Durchmesser von 2 nm bis 50 µm, vorzugsweise 2 nm bis 100 nm, aufweist.

9. Tinte nach einem der Ansprüche 2 bis 8, **dadurch gekennzeichnet, dass** der Durchmesser der Kern/Schale-Partikel 3 nm bis 100 µm beträgt.

10. Tinte nach einem der Ansprüche 2 bis 9, **dadurch gekennzeichnet, dass** die Oberfläche der Schale mit Alkylalkoxysilanen, vorzugsweise ausgewählt aus Hexamethyldisilazan, Octyltrimethoxysilan, Octyltriethoxysilan, Hexadecyltrimethoxysilan und Mischungen davon, oder Polyether-funktionellen Trimethoxysilanen funktionalisiert ist.

11. Tinte nach einem der Ansprüche 2 bis 10, **dadurch gekennzeichnet, dass** die Tinte enthält
0,5 bis 40 Gew.-% Kern/Schale-Partikel,
50 bis 75 Gew.-% mindestens eines Lösemittels,
0 bis 10 Gew.-% Pigmente,
0 bis 3 Gew.-% Dispergiermittel,
0 bis 4 Gew.-% eines Wärmeleitfähigkeitsadditivs und
0 bis 3 Gew.-% Netzmittel,
jeweils bezogen auf das Gesamtgewicht an Tinte.

12. Verwendung einer Tinte gemäß einem der vorherigen Ansprüche in Powder Bed Fusion-Verfahren, vorzugsweise in einem Selective Absorbing Sintering-Verfahren.

13. Verwendung nach Anspruch 12, **dadurch gekennzeichnet, dass** die Tinte mittels Inkjet-Verfahren aufgebracht wird.

14. Verfahren zur Herstellung von dreidimensionalen Objekten mittels Powder Bed Fusion-Verfahren, **gekennzeichnet durch** die folgenden Schritte
a. Bereitstellung eines Pulvers in einer Schichtdicke von 30 bis 200 µm,
b. Aufbringen einer Tinte mittels Inkjet-Verfahren auf zu sinternde Stellen des Pulvers,
c. Aufbringen weiteren Pulvers,
d. Wiederholen der Schritte b und c,
wobei ein magnetisches Feld mit einer Frequenz von 50 kHz - 100 MHz, bevorzugt 500 khz - 10 MHz, zur selektiven Sinterung eingestellt wird, **dadurch gekennzeichnet, dass** eine Tinte gemäß einem der Ansprüche 1 bis 11 eingesetzt wird.

15. Verfahren nach einem der Ansprüche 14, **dadurch gekennzeichnet, dass** das Verfahren bei einer Temperatur von 10 °C bis 40 °C, vorzugsweise bei Raumtemperatur, durchgeführt wird.
